# EUROPEAN PATENT APPLICATION

(11) **EP 1 538 399 A2**
(43) Date of publication of application: **08.06.2005**
(21) Application number: 04397022.7
(22) Date of filing: 26.11.2004
(51) Int. Cl.: F24F 11/00

(54) **Control method and control equipment for an air conditioning system**

(30) Priority: 03.12.2003 FI 20035225
(71) Applicant: TIIHONEN, Ossi, 40530 JYVÄSKYLÄ (FI)
(72) Inventor: TIIHONEN, Ossi, 40530 JYVÄSKYLÄ (FI)
(74) Representative: Helke, Kimmo Kalervo

(57) **Abstract**

The invention relates to a control method for an air conditioning system. The air conditioning system includes inlet and outlet air devices (11) as well as an inlet air valve (17) and an outlet air valve (18) in each air conditioned space (10) connected to an outlet air channel (13'). The air conditioning system also includes adjustment and control equipment (15) connected to the inlet and outlet air valves (17, 18). The method being used for measuring pressure and temperature in the air conditioning system based on which the inlet and outlet air valves (17, 18) are controlled individually for each space. The pressure is measured as an absolute pressure gradient between each air conditioned space (10) and the outdoor air surrounding it. In addition, temperature is separately measured in each air conditioned space (10) and the inlet and outlet air valves (17, 18) of each air conditioned space (10) are separately controlled based on the space-specific pressure gradient and temperature. The invention also relates to corresponding control equipment.

## Description

The invention relates to a control method for an air conditioning system, the air conditioning system being arranged in a building comprising a plurality of spaces and which air conditioning system includes
- inlet and outlet air devices as well as inlet and outlet air channels connected thereto,
- an inlet air valve connected to the inlet air channel in each space to be air conditioned,
- an outlet air valve connected to the outlet air channel in each space to be air conditioned, and
- adjustment and control equipment connected to the inlet and outlet air valves,
the said method being used for measuring pressure and temperature in the air conditioning system, based on which the inlet and outlet air valves are controlled individually for each space. The invention also relates to corresponding control equipment.

In buildings comprising a plurality of separate spaces it is normally made use of an air conditioning system comprising one inlet air unit and one outlet air unit. Each air conditioned space, most commonly a room, is provided with inlet and outlet air valves, connected to the inlet and outlet air channels for leading air in and out of the space. The desired ventilation of the space is achieved by controlling the valves. Normally the valve positions are fixed, in which case the air conditioning system can be controlled only by using either the full or half power of the inlet air fan. On the other hand, the valves can be equipped with actuators for the control of which specific control equipment is used.

With fixed valve settings even an empty room has continuous air conditioning, which causes unnecessary costs. At the same time, air conditioning is insensitive to other parameters, and ventilation is then often perceived as poor. For example, draught may be perceived in the space or the amount of air is insufficient. In addition, centralized control equipment becomes complicated, when the volume of inlet and outlet air is adjusted interdependently. Retrofitting of centralized equipment, in particular, is difficult and extremely expensive. Furthermore, valve controls are usually interdependent and in practice one valve is adjusted based on the air volume that flows through the other. This solution requires several different sensors and controllers.

A Swedish patent application No. 0000648 proposes an air conditioning system provided with control equipment. Here each space is equipped with adjustable inlet and outlet air valves, for the control of which a computer-based central control is used. The air conditioning system also includes pressure and temperature sensors, located in the inlet and outlet air channels. Based on the sensor values and the target values entered in the system, the central control calculates the air conditioning need, based on which both the inlet air and outlet air valves are controlled. In the proposed air conditioning system, a great amount of long wiring is needed for connecting a plurality of sensors to the central control, of which, in addition, a lot of computing power is required. In practice, a computed control is also inaccurate and partly even faulty. In addition, the correlation of the pressure gradient between the inlet and outlet air channels with the actual pressure level of the space is often faulty, which can lead to e.g. moisture problems in the space, irrespective of air conditioning. Furthermore, in the proposed air conditioning system, air flows are balanced by measuring the supply air flow. This further increases the costs of the air conditioning system.

The object of the invention is to provide a new control method for an air conditioning system, the control method being less complicated, yet more accurate than heretofore. Another object of the invention is to provide new control equipment for an air conditioning system, the control equipment being less expensive than heretofore and avoiding the drawbacks of the prior art technique. The characteristic features of the control method according to this invention become evident from the appended claim 1. Likewise, the characteristic features of the control equipment according to the invention become evident from the appended claim 6. In the method according to the invention, control of inlet air and outlet air is separate and, to a large extent, independent of each other. In addition, actual values are used as the basis of control so that air conditioning conforms to the specific requirement at all times. In this way the air quality and temperature, for example, are perceived comfortable in the space. In an unused space, in turn, air conditioning is automatically adjusted to a lower setting, which reduces the operating costs. The control equipment according to the invention is low-cost and can be easily located in each space. Simple components can be used in the control equipment and without a high computing power requirement. In spite of its simple design the control equipment provides appropriate air conditioning in various conditions, which, in addition, is adequate for the actual requirements. Also, the control equipment can be easily retrofitted even in an air conditioning system based on constant air flow.

The invention is described below by making reference to the enclosed drawings illustrating one of the embodiments of the invention, in which
- Figure 1: is a principal drawing of an air conditioning system of a building, equipped with control equipment according to the invention,
- Figure 2: is a principal drawing of the regulation schedule of the control equipment of the air conditioning system according to the invention,
- Figure 3: shows a diagram of the operation of the control equipment.

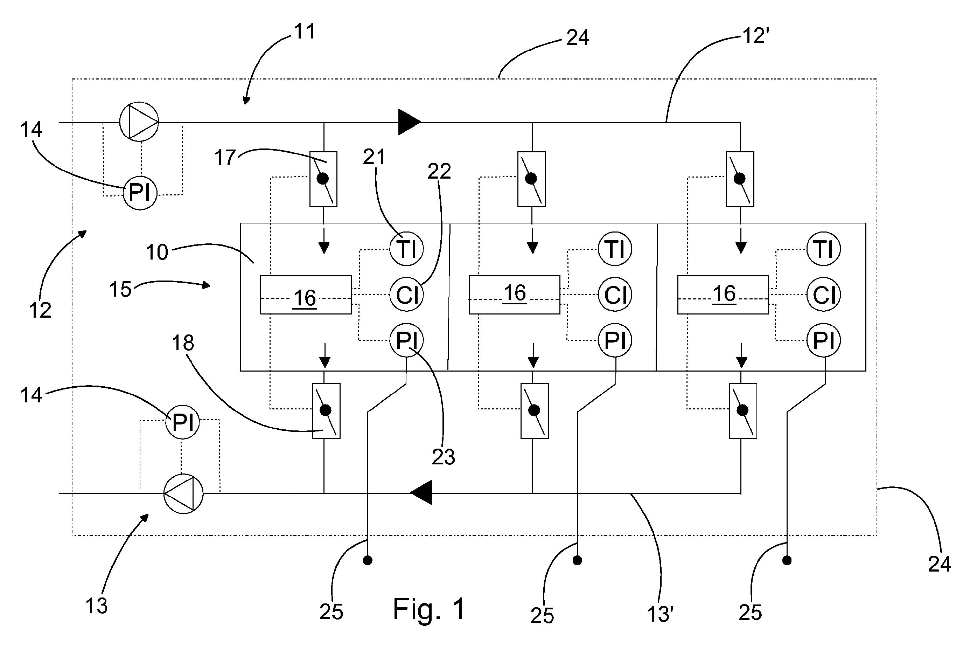

Figure 1 is a principal drawing of a building 24 comprising three separate spaces 10. The air conditioning system of the building 24 includes inlet and outlet air devices 11 and inlet and outlet air channels 12' and 13' connected thereto. Here the inlet and outlet air devices 11 include inlet and outlet air units 12 and 13, of which a principal view is shown in Figure 1. Both the inlet air unit 12 and the outlet air unit 13 are equipped with a pressure gradient sensor 14, based on which the rotation speed of each unit is controlled according to the load. Inlet air is led to the space 10 through the inlet air channel 12' according to a method known in the art. Correspondingly, outlet air is led out from the space 10 through the outlet air channel 13'.

The air conditioning system also includes, in each air conditioned space 10, an inlet air valve 17 connected to the inlet air channel 12' and an outlet air valve 18 connected to the outlet air channel 13'. The air conditioning system also includes adjustment and control equipment 15 connected to the inlet and outlet air valves 17 and 18, which are adjusted based on the measured pressure and temperature differences individually for each space. According to the invention, firstly the pressure is measured as an absolute pressure gradient between each air conditioned space 10 and the outdoor air surrounding it. Secondly, the temperature is measured separately in each air conditioned space 10. Furthermore, the inlet and outlet air valves 17 and 18 of each air conditioned space 10 are separately controlled based on the space-specific pressure gradient and temperature. The use of actual pressure and temperature values allows an accurate control of air conditioning, and air conditioning always meets the requirements of each situation. This increases the comfort in the space reducing operating costs at the same time. Surprising is also a separate control of the inlet and outlet air valves 17 and 18, which simplifies the control. In addition, the control can be implemented using devices that are notably less complicated than heretofore. In this way, complicated control equipment can be avoided, and air conditioning can be controlled more precisely than heretofore. Functionally similar parts are referred to using identical reference numbers.

Pressure and temperature values can be used in different ways for controlling the inlet and outlet air valves. According to the invention, inlet air is preferably controlled individually for each space by adjusting the inlet air valve based on the temperature in the space to be air conditioned. This allows maintaining a desired temperature in the space by simply adjusting the inlet air volume. According to the situation, a heater or a cooler can be used arranged to the inlet air unit (not shown). In addition to the temperature, or instead of it, inlet air can be controlled individually for each space by adjusting the inlet air valve based on the carbon dioxide content and/or other measurable parameter of the air conditioned space. Thus the inlet air volume is controlled based on the load when the space is occupied by many people, for example. Even the mere temperature correlates with the load, but monitoring of the carbon dioxide content, for example, is more accurate than this. The space can also be monitored, for example, for moistness or presence, and this information can then be used for controlling the air conditioning. The design of the air conditioning system is described in more detail in connection with the control equipment.

Based on the differentiated control according to the invention, outlet air is controlled individually for each space by adjusting the outlet air valve based on the absolute pressure gradient between the air conditioned space and the outdoor air surrounding it. In other words, the outlet air valve is controlled independent of the inlet air valve. By using the actual pressure gradient, the pressure can be set at an optimum value in each space, which is important for the comfort. In addition, appropriate pressurization can help avoiding moisture problems, for example, in the space. At the same time, the control of the outlet air valve remains simple while being, however, accurate.

The air conditioning system additionally uses at least one control value. That is, the adjustment of the inlet and outlet air valves is controlled with at least one control value, which is set individually for each space. For example, for measuring the temperature related to the adjustment of the inlet air valve, it is possible to set a target temperature, which the control method seeks to maintain. Correspondingly, it is possible to set a pressure gradient target, based on which the outlet air valve is then controlled. The control values are space-specific, allowing setting of desired air conditioning in each space. The control can also use other control values, which are set with a suitable switch, for example, or which are values given by specific sensors.

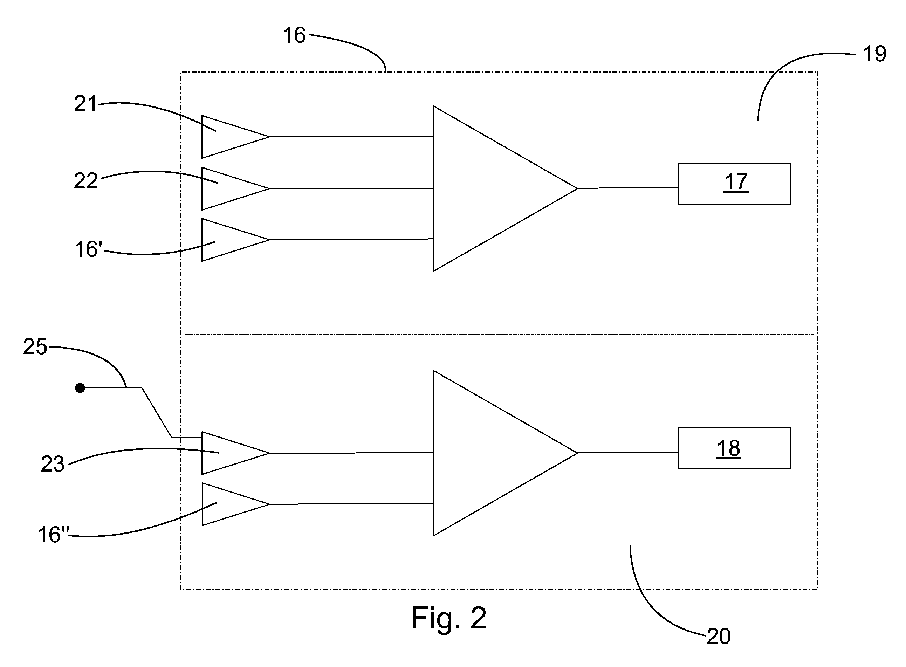

Figures 1 and 2 also show the temperature and pressure sensors 21 and 23 for measuring the pressure and temperature in the air conditioning system. The inlet and outlet air valves 17 and 18 are then adjusted based on the measurement values specifically for each space. According to the invention, each air conditioned space 10 is equipped with both a temperature sensor 21 and a pressure sensor 23. In this way it is possible to obtain accurate information on the air quality of the space and thus also on the air conditioning requirement. In addition, the pressure sensor 23 is arranged to measure the absolute pressure gradient between the air conditioned space 10 concerned and the outdoor air surrounding it. This allows taking into attention the effects of the outdoor air variations in the control of air conditioning. The adjustment and control equipment 15 further includes one control device 16 for each air conditioned space 10. This provides a space-specific control of air conditioning, which additionally corresponds to the actual condition. According to the invention, the control device is equipped with two separate control circuits 19 and 20, of which one control circuit 19 is for the inlet air valve 17 while the other control circuit 20 is for the outlet air valve 18 (Figure 2). Thus the inlet and outlet air valves 17 and 18 of each air conditioned space 10 can be separately controlled based on the space-specific pressure gradient and temperature.

Figure 2 shows a schematic view of the design of the control circuits 19 and 20. According to the invention, the temperature sensor 21 is connected to the first control circuit 19 for controlling inlet air by adjusting the inlet air valve 17 space-specifically based on the temperature of the air conditioned space 10. In addition, the control equipment may include a carbon dioxide sensor 22 and/or other sensor connected to the first control circuit 19. In this way inlet air can be controlled individually for each space by adjusting the inlet air valve based on the carbon dioxide content and/or other measurable parameter of the air conditioned space. Based on the above, the parameter can be moisture or presence, for example.

Similarly, the pressure sensor 23 is connected to the second control circuit 20. This allows controlling outlet air by adjusting the outlet air valve space-specifically based on the absolute pressure gradient between the air conditioned space and the outdoor air surrounding it. Based on the above, the outlet air valve is thus controlled independent of the inlet air valve and even completely separately in principle. Different factors, however, influence each other and hence the operations of the control circuits have a certain kind of connection. In addition, in case of disturbances, for example, it is possible to use common maximum values that influence both the control circuits. In spite of this, the inlet and outlet air valves mainly operate independent of each other.

In practice, the pressure sensor includes two pressure transmitters, one in the space and the other in the environment outside the space. For example, when opening a window in the space the pressures to be monitored are equal in which case the outlet air valve turns to its maximum position while the control equipment seeks to keep the space underpressurized. For avoiding wiring, the pressure sensor can also be installed in the control device arranged in the air conditioned space. In this case the pressure sensor 23 includes a connection 25, which extends to the outdoor air surrounding the air conditioned space 10 for measuring the absolute pressure gradient. That is, the pressure transmitter of the pressure sensor measures the pressure gradient based on the reference pressure generated by the outdoor air conducted along the connection. Irrespective of the design of the pressure sensor, it is thus essential to use the actual outdoor air pressure as reference pressure and compare it to the actual pressure measured in the space.

The control device 16 of the control equipment according to the invention thus includes two separate control circuits 19 and 20, of which the first control circuit 19 is for controlling inlet air and the second control circuit 20 is for controlling outlet air. In Figure 1 the control device 16 is shown as a two-part rectangle. In practice, however, the control device is one apparatus comprising the said control circuits. This becomes more clearly evident from Figure 2, which shows the regulation schedules of the control circuits 19 and 20. In Figure 1 each space includes three sensors, which are connected to the control device. Connected to the first control circuit, i.e. the inlet air control circuit 19, are a temperature sensor 21 and a carbon dioxide sensor 22. The inlet air volume is adjusted based on these two parameters that essentially influence the air quality by controlling the inlet air valve 17 (Figure 2). Similarly, connected to the second control circuit 20 is a pressure sensor 23, based on which the outlet air valve 18 is controlled (Figure 2). In this way the pressurization of the space can be kept precisely as desired.

In Figure 1 PI is a pressure sensor, CI is a carbon dioxide sensor and TI is a temperature sensor. In practice, the pressure sensors of the spaces measure the pressure difference between the space and the outdoor air. The device according to the invention comprises two separate control circuits, of which one controls the inlet air flow while the other controls the outlet air flow. In practice, the temperature sensor and the carbon dioxide sensor measure the air quality and control the inlet air flow for providing indoor air as per the set point values. On the other hand, the device measures the absolute pressure gradient between the indoor air and the outdoor air and controls the outlet air flow for maintaining an optimum vacuum, for example. One input value of both control circuits is the control value set for the device, which in this case is the desired temperature value 16' or pressure difference value 16" (Figure 2). When using inlet air heating, raising the temperature basically requires increasing the inlet air volume. Correspondingly, when using inlet air cooling, raising the temperature basically requires reducing the inlet air volume, which is taken into account in the control of the device according as the seasons change.

The control method and equipment of an air conditioning system according to the invention provide air conditioning which is easily, yet accurately controllable and which can maintain a desired air quality individually for each space. Energy can be saved at the same time. In addition, the control equipment is easily retrofittable and its purchase and operating costs, being clearly lower than conventionally, allow installing the control equipment also in small-sized spaces. In practice, air conditioning is used to convey out impurities generated in the space and to introduce a sufficient volume of compensating air. At the same time, the temperature in the space can be suitably adjusted by using either cooled or heated supply air. In addition, latent heat in the outlet air can be utilized for heating the supply air by using a suitable heat exchanger. Air conditioning is normally controlled such that the building and its spaces are slightly underpressurized relative to the outdoor air. This is used for avoiding moisture damage in the constructions as well as health hazards caused by microbes. By using suitable sensors the air conditioning system can also be controlled for example for maintaining specific thermal conditions in the spaces at different times of day or year in varying load situations. Particularly the carbon dioxide sensor is used for controlling air conditioning based on the load caused by people working in the space. As the load increases, air conditioning is increased. In addition to increasing the air flow, the control device can be used to reduce air conditioning at off-peak hours. A completely empty and unused space thus has practically very low air flow. The control equipment being space-specific, air conditioning of each air conditioned space in the building is always automatically controlled according to the requirements adapting to varying conditions.

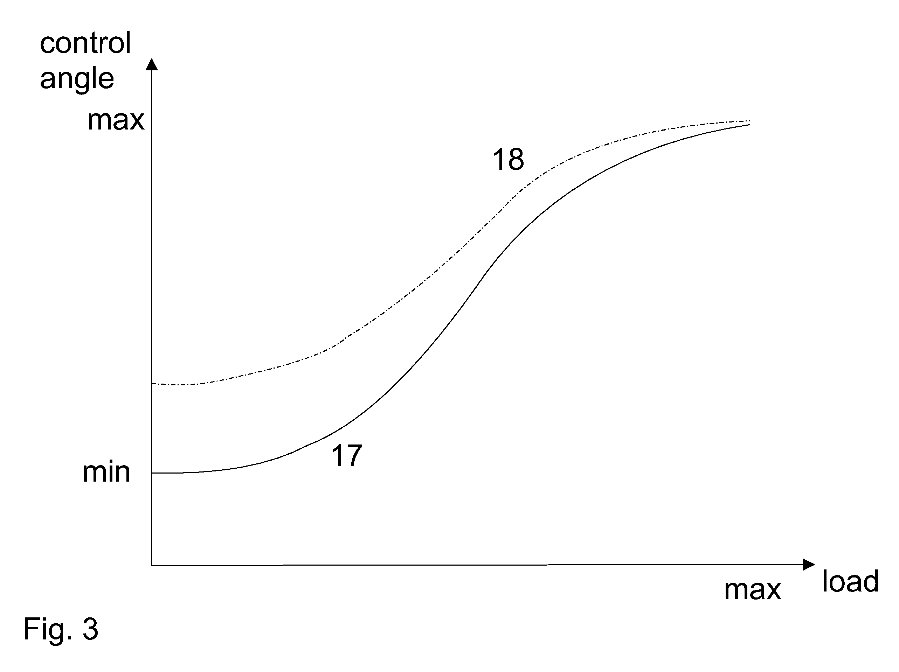

The diagram in Figure 3 shows the principle of the inlet and outlet air valve positions in function of the load. The positions of the inlet and outlet air valves depend to a great extent on the load, thus, in practice, on the temperature and the carbon dioxide content, for example. The valve position is changed by adjusting its control angle. In practice, as the control angle increases, the valve opens and the flow increases in the channel. The variation of the control angle of the inlet air valve in function of the load is depicted with a continuous line. A dot-and-dash line, in turn, represents the correlation of the control angle of the outlet air valve with the load. For keeping the space underpressurized the outlet air valve is always more open compared to the inlet air valve. As the load increases, the difference between the control angles decreases. With a small load the air flow is low, in which case the difference between the control angles is intentionally kept greater than at a great load for maintaining a vacuum.

## Claims

1. A control method for an air conditioning system, the air conditioning system being arranged in a building (24) comprising a plurality of separate spaces (10) and which air conditioning system includes
- inlet and outlet air devices (11) as well as inlet and outlet air channels (12', 13') connected thereto,
- an inlet air valve (17) in each air conditioned space (10) connected to the inlet air channel (12'),
- an outlet air valve (18) in each air conditioned space (10) connected to the outlet air channel (13'), and
- adjustment and control equipment (15) connected to the inlet and outlet air valves (17, 18),
which method being used for measuring pressure and temperature in an air conditioning system, based on which the inlet and outlet air valves (17, 18) are controlled individually for each space,
**characterized in that** the pressure is measured as an absolute pressure gradient between each air conditioned space (10) and the outdoor air surrounding it, and the temperature is measured individually in each air conditioned space (10), and the inlet and outlet air valves (17, 18) of each air conditioned space (10) are separately controlled based on the space-specific pressure gradient and temperature.

2. A control method according to claim 1, **characterized in that** inlet air is controlled individually for each space by adjusting the inlet air valve (17) based on the temperature of the air conditioned space (10).

3. A control method according to claim 1 or 2, **characterized in that** inlet air is controlled individually for each space by adjusting the inlet air valve (17) based on the carbon dioxide content and/or other measurable parameter of the air conditioned space (10).

4. A control method according to any of claims 1 - 3, **characterized in that** outlet air is controlled individually for each space by adjusting the outlet air valve (18) based on the absolute pressure gradient between the air conditioned space (10) and the outdoor air surrounding it independent of the inlet air valve (17).

5. A control method according to any of claims 1 - 4, **characterized in that** adjustment of the inlet and outlet air valves (17, 18) is controlled with at least one control value (16', 16"), which is set individually for each space.

6. Control equipment for an air conditioning system, the air conditioning system being arranged in a building (24) comprising a plurality of separate spaces (10) and which air conditioning system includes
- inlet and outlet air devices (11) as well as inlet and outlet air channels (12', 13') connected thereto,
- an inlet air valve (17) in each air conditioned space (10) connected to the inlet air channel (12'),
- an outlet air valve (18) in each air conditioned space (10) connected to the outlet air channel (13'), and
- adjustment and control equipment (15) connected to the inlet and outlet air valves (17, 18),
- temperature and pressure sensors (21, 23) for measuring pressure and temperature in the air conditioning system and thus controlling the inlet and outlet air valves (17, 18) individually for each space,
**characterized in that** each air conditioned space (10) includes both the temperature sensor (21) and the pressure sensor (23), which is arranged to measure the absolute pressure gradient between the air conditioned space (10) concerned and the outdoor air surrounding it, and the adjustment and control equipment (15) includes one control device (16) for each air conditioned space (10) equipped with two separate control circuits (19, 20), of which one control circuit (19) is for the inlet air valve (17) and the other control circuit (20) is for the outlet air valve (18) for controlling separately the inlet and outlet air valves (17, 18) of each air conditioned space (10) based on the space-specific pressure gradient and temperature.

7. A control equipment according to claim 6, **characterized in that** the temperature sensor (21) is connected to the first control circuit (19) for controlling inlet air by adjusting the inlet air valve (17) space-specifically based on the temperature of the air conditioned space (10).

8. A control equipment according to claim 6 or 7, **characterized in that** the control equipment also includes a carbon dioxide sensor (22) and/or other sensor, which is connected to the first control circuit (19) for controlling inlet air by adjusting the inlet air valve (17) space-specifically based on the carbon dioxide content and/or other measurable parameter of the air conditioned space (10).

9. Control equipment according to any of claims 6 - 8, **characterized in that** the pressure sensor (23) is connected to the second control circuit (20) for controlling outlet air by adjusting the outlet air valve (18) space-specifically based on the absolute pressure gradient between the air conditioned space (10) and the outdoor air surrounding it independent of the inlet air valve (17).

10. Control equipment according to claim 9, **characterized in that** the pressure sensor (23) is in the control device (16) arranged in the air conditioned space (10) and the pressure sensor (23) includes a connection (25), extending to the outdoor air surrounding the air conditioned space (10) for measuring the absolute pressure gradient.
